# EUROPEAN PATENT APPLICATION

(11) **EP 4 231 503 A2**
(43) Date of publication of application: **23.08.2023**
(21) Application number: 23156371.9
(22) Date of filing: 13.02.2023
(51) Int. Cl.: H02K 1/14, H02K 21/44

(54) **FLUX-SWITCHING PERMANENT MAGNET ELECTRIC MACHINE**

(30) Priority: 16.02.2022 IT 202200002807
(71) Applicant: DENSO THERMAL SYSTEMS S.p.A., 10046 Poirino (Torino) (IT)
(72) Inventor: PUGLIESE, Vincenzo, I-10046 POIRINO (Torino) (IT); LORUSSO, Annunziata Bruna, I-10046 POIRINO (Torino) (IT); ACQUAVIVA, Sebastiano, I-10046 POIRINO (Torino) (IT)
(74) Representative: Vanzini, Christian

(57) **Abstract**

Flux-switching permanent magnet electric machine comprising a fixed part and a movable part (20) capable of moving relative to the fixed part along a movement direction. The fixed part is divided into a plurality of separated segments (11, 12, 13) distributed along the movement direction, each segment comprising a subset of U-shaped modules (30, 30') and respective permanent magnets (40) and coils (50), wherein the coils of each single segment are connected in series to each other in such a way that the single segment (11, 12, 13) forms a single phase winding (e1, e2, e3), wherein the plurality of segments forms a plurality of phases of the machine.

## Description

The present invention relates generally to flux-switching permanent magnet electric machines. Such machines are electric machines with permanent magnets on the stator/fixed part and without windings on the rotor/movable part, wherein switching the polarity of the flux concatenated by the coils present on the stator is achieved by the double saliency (both on the stator/fixed part and the rotor/movable part) and the relative motion of the rotor/movable part with respect to the stator/fixed part. In the case of rotating machines, this relative motion is rotation, while in the case of linear motors, it is translation.

In particular, the present invention relates to a machine wherein the fixed part comprises:
- a plurality of U-shaped modules of ferromagnetic material arranged along the movement direction of the movable part,
- a plurality of permanent magnets alternated with said modules and having a magnetization direction tangent to said movement direction, wherein the polarization direction of the single permanent magnet is inverted relative to the magnetization direction of the preceding permanent magnet, and wherein each permanent magnet is interposed between respective legs of adjacent modules and forms, together with said legs, a fixed part tooth extending towards the movable part of the electric machine, and
- a plurality of coils, each of which is wound around a particular fixed part tooth,
wherein the movable part is made of ferromagnetic material and is without electrical windings, said movable part having a plurality of movable part teeth arranged along said movement direction and extending towards the fixed part of the electric machine.

With respect to permanent-magnet brushless motors, flux-switching machines have permanent magnets on the stator and thus allow heat to be removed from the magnets more effectively. Moreover, flux-switching machines have the advantage of having magnets in the magnetic lens configuration and thus exhibit high torque density and high air gap induction even with permanent magnets with low residual induction, e.g., made of ferrite. Moreover, the rotor is particularly robust as it consists of only a few parts, or possibly may be made as a single piece. The absence of magnets on the rotor avoids the problem of magnet retention to counteract the effects of centrifugal force.

One object of the present invention is to make available a flux-switching machine architecture wherein it is possible to change the size of the modules or change the number of phases.

For this object, according to the present invention a machine of the type defined above is proposed, wherein the fixed part of the electric machine is divided into a plurality of separated segments distributed (possibly uniformly) along said movement direction, each segment comprising a subset of said modules and respective permanent magnets and coils,
wherein the coils of each single segment are connected in series to each other in such a way that the single segment forms a single phase winding,
wherein said plurality of segments forms a plurality of phases of the machine.

The solution lends itself well to forming direct drive motors for large diameter applications and, at the extreme, with infinite radius, to form linear motors. The advantage of the single phase segment is that the overall winding is divided into several windings constituting the phases, and each phase winding is separated both mechanically and magnetically from the windings of the other phases and is completely independent, thus completely decoupled therefrom, with significant advantages in terms of reliability, safety, and manufacturability.

Other features and advantages of the machine according to the invention will become clearer from the following detailed description of an embodiment of the invention, made in reference to the accompanying drawings, provided purely for illustrative and non-limiting purposes, wherein:
Fig. 1 is a schematic view of a rotating machine according to the invention;
Fig. 2 is an enlarged scale view of a circular segment of the machine in Fig. 1;
Fig. 3 is an exploded view of the segment in Fig. 2;
Fig. 4 and 5 show the electrical connection diagram of the machine in Fig. 1; and
Fig. 6 is a schematic view of a linear motor according to the invention.

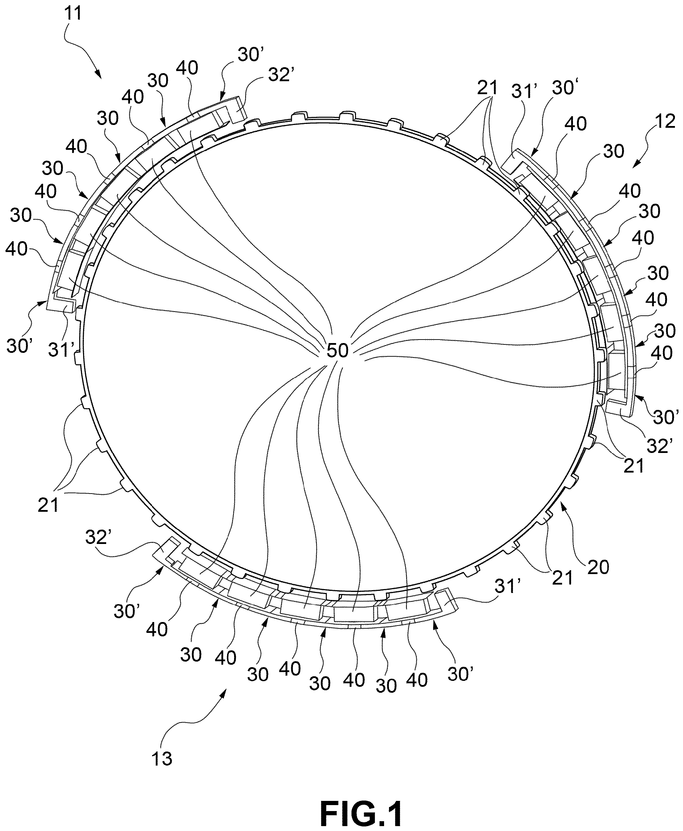

In reference to Fig. 1 to 3, a flux-switching permanent magnet rotating machine, in particular a motor, is shown.

The rotating machine comprises a stator divided into a plurality of identical segments 11, 12, 13 and a rotor 20 capable of moving with respect to the stator along a circumferential movement direction. The segments 11, 12, 13 are fixed to a support (not shown).

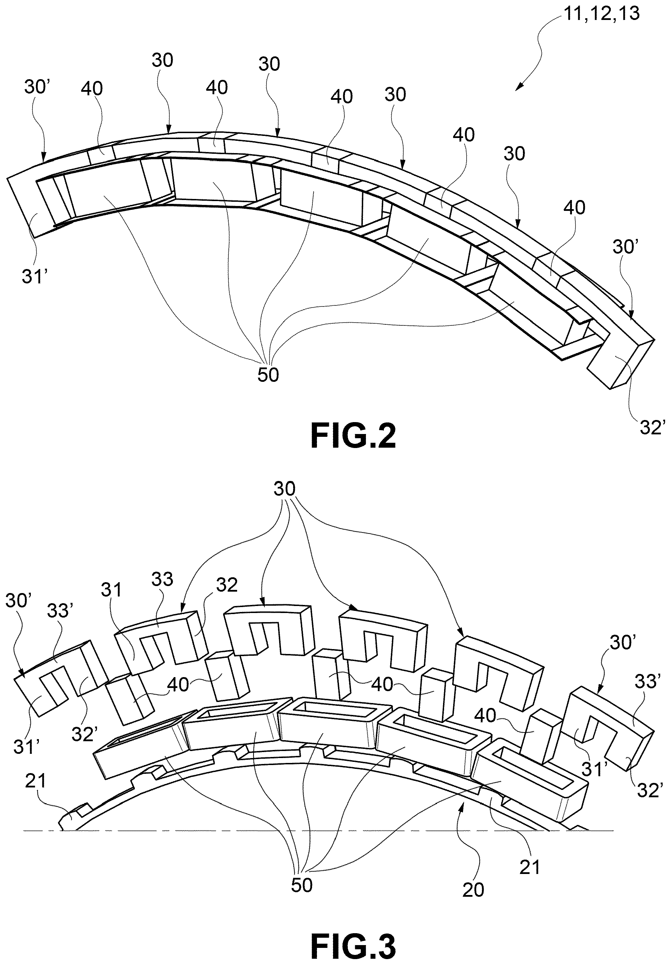

The stator, or more precisely each segment 11, 12, 13, comprises a plurality of U-shaped modules 30, 30' of ferromagnetic material arranged along the circumferential movement direction. These modules may be seen in particular in Fig. 3. Each module comprises a pair of legs 31, 32; 31', 32' interconnected by an intermediate portion 33, 33' so as to form a hollow facing the rotor 20. In the figures, the modules are denoted by the numbers 30 and 30' only to highlight the different positioning of the single modules. 30' designates the end modules of the single segment, while 30 designates the inner modules, which are comprised between the end modules 30'. In the example shown, the structure of the end modules 30' is identical to that of the inner modules 30. However, it is understood that the structure of the end modules 30' may also be different from that of the inner modules 30. Similarly, the legs and the intermediate portions of the end modules 30' are denoted by 31', 32' and 33', while the legs and the intermediate portions of the inner modules 30 are denoted by 31, 32 and 33, and in the example shown are respectively identical to the legs 31', 32' and the intermediate portions 33' of the end modules 30'. However, it is understood that the legs 31, 32 and the intermediate portions 33 of the inner modules 30 may also be different in structure from the legs 31', 32' and the intermediate portions 33' of the end modules 30'.

The stator, or more precisely each segment 11, 12, 13, also comprises a plurality of permanent magnets 40 alternated with the modules 30, 30' and having a magnetization direction tangent to the rotation direction of the rotor 20. More precisely, within each segment 11, 12, 13, the polarization direction of the single permanent magnet (e.g., oriented clockwise) is inverted from the magnetization direction of the previous permanent magnet (e.g., oriented counterclockwise). The polarization configuration of the permanent magnets described above is identical for all segments.

Each permanent magnet 40 is interposed between respective legs 32/31', 32/31, 32'/31 (or between respective legs 32/31' and 32'/31 in the case where there is only one inner module) of adjacent modules 30, 30' and forms, together with said legs, a tooth or stator pole extending towards the rotor/movable part 20 of the electric machine.

The stator, or more precisely each segment 11, 12, 13, also comprises a plurality of coils 50, each of which is wound around a particular stator tooth. Each coil 50 is then wound around the assembly formed by the particular permanent magnet and the legs of the modules adjacent thereto.

As may be seen in the figures, as each segment is separated from the others, the outer legs of the end modules 30' of each segment are without permanent magnets and coils. In other words, they are free, that is, not coupled to permanent magnets or windings. "Outer" legs mean the legs of the single end modules 30' that are at the ends of the relevant segment 11, 12, 13. For example, in Fig. 2 and 3, the "outer" legs are the outermost (leftmost) leg 31' of the end module 30' to the left of the segment and the outermost (rightmost) leg 32' of the end module 30' to the right of the segment.

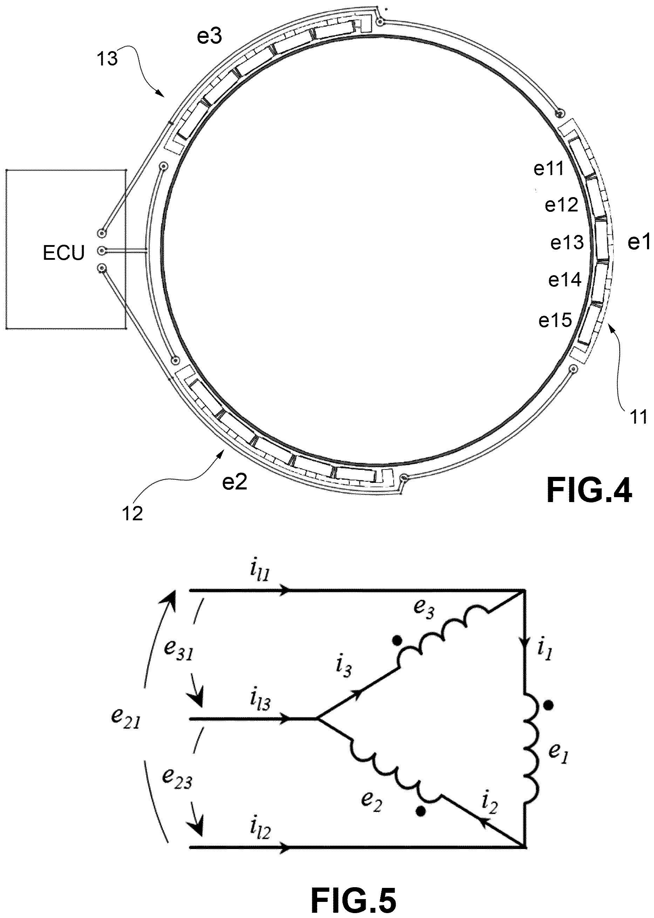

Fig. 4 and 5 are the electrical connection diagram of the machine described above. The coils 50 of each single segment are connected in series to each other in such a way that the single segment 11, 12, 13 forms a single phase winding. The coils of the segment 11 are denoted by e11, e12, e13, e14 and e15 in Fig. 4; these coils are connected in series to form a single phase winding denoted by e1. The single phase windings of the other segments 12 and 13 are denoted by e2 and e3, respectively; for convenience, the single coils of these windings have not been identified, but it is understood that the arrangement of the connections is the same as that of the winding e1. The single phase windings e1, e2, e3 are connected to each other as well as to a control unit ECU according to a polyphase configuration known per se, such as, for example, according to a polygon configuration, in particular a triangle configuration as depicted in Fig. 5, or a balanced star configuration.

The movable part/rotor 20 is made of ferromagnetic material and is without electrical windings. The movable part/rotor has a plurality of movable part teeth 21 arranged along the direction of rotation/circumference of the rotor and extending towards the fixed part/stator of the electric machine.

The motor described above may, for example, be used in the blower of an HVAC unit for a motor vehicle. The components of the stator may, for example, be attached to the shroud of the blower by techniques known per se to the person skilled in the art, such as by snap fastening. The wirings may in particular be overmolded in the shroud.

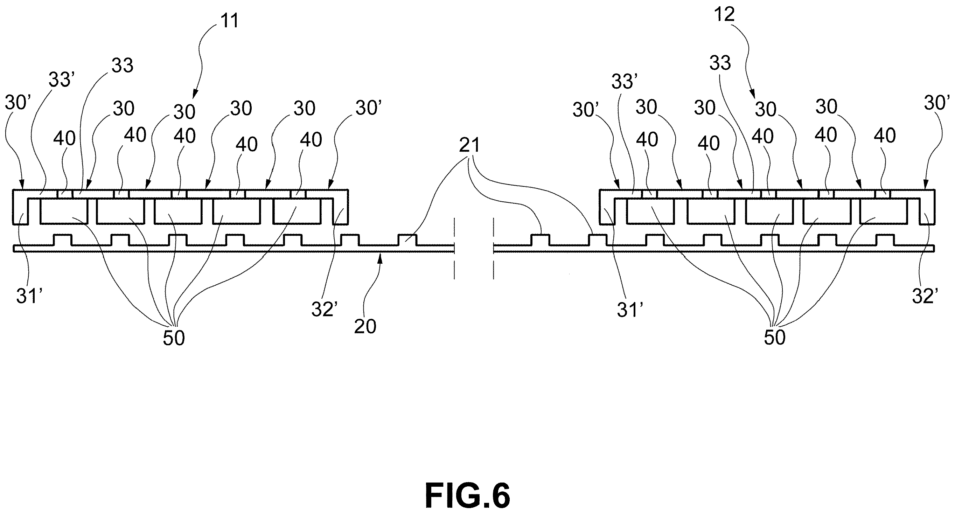

Fig. 6 shows a linear motor, which geometrically may be regarded as a special case of the machine shown in Fig. 1-5, wherein the radius of the machine is equal to infinity. Thus, in the motor of Fig. 6, instead of a plurality of circular segments or arcs, there is a plurality of linear segments, each comprising a subset of modules with their respective permanent magnets and coils. Instead of a rotor, there is a slider of a certain length, which is movable along a translation direction that coincides with the longitudinal direction of the slider. In Fig. 6, elements corresponding to those in Fig. 1-5 have been assigned the same numerical references.

## Claims

1. A flux-switching permanent magnet electric machine, comprising a fixed part and a movable part (20) capable of moving relative to the fixed part along a movement direction,
wherein the fixed part comprises:
- a plurality of U-shaped modules (30, 30') of ferromagnetic material arranged along said movement direction,
- a plurality of permanent magnets (40) alternated with said modules and having a magnetization direction tangent to said movement direction, wherein the magnetization direction of the single permanent magnet is inverted relative to the magnetization direction of the preceding permanent magnet, and wherein each permanent magnet is interposed between respective legs (31, 31', 32, 32') of adjacent modules (30, 30') and forms, together with said legs, a fixed part tooth extending towards the movable part (20) of the electric machine, and
- a plurality of coils (50), each of which is wound around a respective fixed part tooth,
wherein the movable part (20) is made of ferromagnetic material and is without electrical windings, said movable part having a plurality of movable part teeth (21) arranged along said movement direction and extending towards the fixed part of the electric machine,
**characterized in that** said fixed part is divided into a plurality of separated segments (11, 12, 13) distributed along said movement direction, each segment comprising a subset of said modules and respective permanent magnets and coils,
wherein the coils of each single segment are connected in series to each other in such a way that the single segment (11, 12, 13) forms a single phase winding (e1, e2, e3),
wherein said plurality of segments forms a plurality of phases of the machine.

2. The machine according to claim 1, wherein said single phase windings are electrically connected to each other according to a polygon connection or according to a balanced star connection.

3. The machine according to any of the preceding claims, wherein each segment comprises a pair of end modules (30') and at least one inner module (30) interposed between the end modules (30'), wherein said end modules are different from said at least one inner module.

4. The machine according to any of claims 1 to 3, wherein each segment comprises a pair of end modules (30') and at least one inner module (30) interposed between the end modules (30'), wherein said end modules and said at least one inner module are identical.

5. The machine according to claim 3 or 4, wherein the outer legs (31', 32') of the end modules (30') of each segment (11, 12, 13) are without permanent magnets and without coils.

6. The machine according to any of the preceding claims, wherein said segments (11, 12, 13) are uniformly distributed along said movement direction.

7. The machine according to any of the preceding claims, wherein the machine is a rotating electrical machine, wherein the fixed part is a stator of the rotating electrical machine, wherein the movable part is a rotor of the rotating electrical machine, arranged coaxially within the stator, and wherein each stator segment is circular arc-shaped.

8. The machine according to claim 7, wherein the machine is the motor of a blower of an HVAC unit for a motor vehicle, wherein said segments (11, 12, 13) are fixed to a shroud of the blower.

9. The machine according to claim 8, wherein wirings of the motor are at least partially overmolded in the shroud.

10. The machine according to any of claims 1 to 6, wherein the machine is a linear motor, wherein each segment is shaped as a linear segment.
